# EUROPEAN PATENT APPLICATION

(11) **EP 4 170 332 A1**
(43) Date of publication of application: **26.04.2023**
(21) Application number: 21315201.0
(22) Date of filing: 20.10.2021
(51) Int. Cl.: G01N 27/24

(54) **APPARATUS AND METHOD FOR NON-INTRUSIVELY DETECTING IMPERFECTIONS IN A TEST OBJECT**

(71) Applicant: AIRBUS HELICOPTERS, 13725 Marignane Cedex (FR)
(72) Inventor: BERNIER, Sébastien, 84120 PERTUIS (FR); TRIBALLIER, Pierre, 13090 AIX EN PROVENCE (FR); PARKER, Dawood, Whitland Carmarthenshire SA34 OLG, Wales (GB); POORE, Robin, Whitland SA34 0RU (GB)
(74) Representative: GPI Brevets

(57) **Abstract**

The invention is related to an apparatus 100, and a method of use of the apparatus 100, for non-intrusively detecting imperfections in a test object 150 made from metallic, non-conductive, and/or composite materials. The apparatus 100 comprises a probe 105 that is adapted to be moved over a test object 150 made from metallic, non-conductive, and/or composite materials. The probe 105 comprises a sensor unit 110 with at least two concentric electrodes that are adapted to generate an electrostatic field, and an oscillator circuit 130 that is adapted to oscillate with an associated oscillation frequency 160 in response to a test object 150 being located in the electrostatic field. The apparatus 100 further comprises an evaluation unit 140 that is adapted to enable localisation of an imperfection in a test object 150 made from metallic, non-conductive, and/or composite materials based on the associated oscillation frequency 160.

## Description

The invention is related to the detection of imperfections, in particular macroscopic imperfections, in metals, non-conductors, and composite materials, and, more particularly, to an apparatus and a method for non-intrusively detecting such imperfections in a test object made from metallic, non-conductive, and/or composite materials.

Safety-critical structural components made from metals, non-conducting materials, and/or composite materials are found in many places, such as high-rise buildings, hazardous material storage and transportation containers, petrochemical processing plants, nuclear power plants, aircrafts, spacecrafts, motor vehicles, construction machinery, just to name a few. Such safety-critical structural components often have predetermined fail-safe characteristics, and the likelihood for the occurrence of failure increases dramatically if imperfections such as delamination and/or porosities in composite materials or corrosion in metals, are present. Therefore, there is a need to test these materials in order to detect imperfections, preferably by performing non-destructive testing (NDT).

Currently, several different non-destructive inspection methods are able to detect imperfections in test objects. Some of the existing non-destructive inspection methods to detect imperfections in test objects made from composite materials include ultrasonic pulse echo inspection, tap-test inspection, x-ray examination, thermography, and shearography. Eddy current. testing, in turn, is a widely used method to detect imperfections in test objects made from metallic materials.

More specifically, Eddy Current Testing (ECT) is one of many non-destructive electromagnetic testing methods used to detect and characterize surface and sub-surface flaws in test objects made from conductive materials. Eddy current testing can detect tight cracks and is comparatively sensitive to detect and size pits. Corrosion can be detected as well, but sizing is usually not accurate and often only detected at an advanced stage.

Ultrasonic pulse echo inspection is often used for detecting imperfections in test objects made from composite materials. In a composite material, an ultrasonic sound wave will travel through the material until it reaches an air boundary. In normal conditions this air boundary will be the opposite surface of the composite. When the composite material has an imperfection such as an unwanted thinning of the composite material or an air inclusion inside the composite material, caused for example by delamination of the structure, the echo will come from that imperfection. The difference in echo time is used to distinguish an undamaged from a damaged test object.

Tap-test inspection is done with a hand-held device which usually consists of a hammer. The basic principle consists of tapping with the hand-held device at different areas of the test object. An area with an underlying imperfection produces a different sound (i.e., resonance frequency) than an area that is free of imperfections due to a difference in stiffness.

In an alternative tap-test inspection, the hammer may be provided with an accelerometer built into the hammer tip. In this case, a respective contact time of the hammer tip with a surface of e.g. a composite test object is measured. If the composite test object is damaged, the respective contact time of the hammer tip will be increased due to lower contact stiffness. However, in both cases this method is limited in terms of the thickness of the test object and provides very limited information on the type and exact position of the imperfection. Furthermore, it is only suitable for detecting impact damage on comparatively small surfaces.

X-ray examination sends low-energy x-rays through the test object which are captured by an x-ray sensitive film that is placed under the test object. Analyzing discolorations of the film can be used to detect flaws in the test object, such as a crushed core, or to detect water in the core cells. However, x-ray examination is not suitable for detecting air inclusions, and x-rays can only be used by staff adequately protected from the harmful effects of x-rays.

The thermography inspection method uses an external heat source to heat up the test object. Because of the low thermal, conductivity and, therefore, low heat flow through composite materials, the heat distribution pattern can be used for damage detection in test objects made from such composite materials. Thermography is especially well-suited to detect water accumulation in composite sandwich panels of larger surfaces.

Shearography or Speckle pattern shearing interferometry is an optical method for detecting imperfections in different materials. A first optical image is obtained of the test object without any load on it. A second optical image is created by "shearing" the first optical image, and a superposition of the first and second images leads to a shear image. A small load is then applied to the test object and a third image is obtained, whereby a non-uniform test object generates a non-uniform movement of the surface of the test object. Software compares the shear image with the third image to detect imperfections in the test object.

Several other inspection methods are being developed with the potential for rapid or large-area inspection capabilities. However, at present, these have limitations that have prevented them from being used extensively. For instance, laser ultrasound generation is one of the promising newer methods, but the cost is currently prohibitive. In contrast, optical and thermal inspection methods are not as expensive but have limited depth penetration and are still considerably more expensive than conventional ultrasound methods.

The document EP 0 527 854 B1 describes a device for non-destructive thickness measurements of dry paint film applied to a plastic non-metallic substrate. The device includes two separate electrodes that are isolated from each other and positioned in a material capable of conforming to the surface of the film that is being measured. However, use of the device is limited to measuring the dry paint film thickness of a paint applied by conventional or electrostatic spraying to a plastic substrate primed with a conductive primer.

The document US 8,452,565 B2 describes a method for calibrating a high frequency measurement device for determining scattering parameters of a measurement object (device under test, DUT). In particular, a high frequency test signal is fed into an electrical lead that is connected to the measurement object (e.g., an electrical or electronic component) or to a circuit having the measurement object. The contactless coupling, for example capacitive, at three different coupling positions (i.e., sections) of the electrical lead is modeled by three ideal capacitors. Instead of capacitive coupling, it is also possible to use inductive couplings or mixed capacitive and inductive couplings, or any other type of coupling. The coupled-out voltages are determined at receivers in the form of measuring sites.

The document US 8,760,184 B2 describes a measuring probe, particularly for a non-contacting vector network analysis system, having a housing and at least one coupling structure disposed on the housing and designed for coupling an RF signal from a signal line, such that at least one additional signal probe is disposed on the housing for coupling an electrical signal into the signal line. A typical application for such a measuring probe consists of testing an electrical or electronic circuit on a printed circuit board, when the circuit comprises an embedded electrical or electronic component to be tested (the DUT-device under test) and other electrical or electronic components.

However, although the above-described non-destructive inspection methods are generally able to detect imperfections in test objects, they are mainly not suitable for detecting delamination in composite materials. Nevertheless, as composite materials are widely used to replace metallic materials, non-destructive inspection methods for detection of delamination in composite materials are increasingly demanded.

For instance, aircraft manufacturers recently tend to replace metallic materials with composite materials whenever possible, as composite materials provide for more design flexibility and are stronger and lighter than metals. Advantageously, lower weight and better aerodynamics result in lower fuel consumption. However, composite materials, unlike metallic materials, are vulnerable to damage such as micro-cracking and delamination where respective composite layers separate from each other. The currently used, and above-described, damage detection, i.e. non-destructive inspection methods have had only partial success with the result that damage assessment of composite structures takes more time than that of metallic structures. This is the reason why there is a need for improved techniques for non-destructive inspection of composite structures.

Based on the limitations and drawbacks of the prior art, an objective of the present invention is to provide a new apparatus and a new method for non-intrusively detecting imperfections in a test object, whereby the test object may be made from metallic, non-conductive, and/or composite materials. This new apparatus and method should provide an accurate and easy-to-operate solution for commercial non-destructive testing of test objects of any size and shape made from metallic, non-conductive, and/or composite materials. This objective is solved by an apparatus comprising the features of claim 1, and by a method comprising the features of claim 15.

More specifically, according to the present invention an apparatus for non-intrusively detecting imperfections in a test object made from metallic, non-conductive, and/or composite materials is provided, which comprises a probe and an evaluation unit. The probe is adapted to be moved over a test object made from metallic, non-conductive, and/or composite materials and comprises a sensor unit and an oscillator unit. The sensor unit comprises at least two concentric electrodes, and insulation means that insulate the at least two concentric electrodes from each other, wherein the at least two concentric electrodes are adapted to generate an electrostatic field. The oscillator circuit is adapted to oscillate with an associated oscillation frequency in response to a test object being located in the electrostatic field. The associated oscillation frequency corresponds to a predetermined oscillation frequency during movement of the sensor unit over the test object at positions without imperfections in the test object, and it corresponds to other oscillation frequencies at positions with imperfections in the test object. The evaluation unit is adapted to enable localisation of an imperfection in a test object made from metallic, non-conductive, and/or composite materials based on occurrence of the other oscillation frequencies.

More generally, the present invention is related to non-intrusively detecting imperfections, in particular macroscopic imperfections, in a test object made from metallic, non-conductive, and/or composite materials by measuring and monitoring a respective tuning frequency, i.e. an oscillation frequency of an oscillator. Advantageously, imperfections such as early corrosion, cracks and/or delamination in test objects, which may even be hidden in the test object and which are not accessible otherwise for examination may, thus, be detected non-intrusively and with a comparatively high resolution independent on whether the test object comprises non-conducting media or metals.

Preferably, the test object is scanned with the sensor unit of the probe of the inventive apparatus, whereby the sensor unit is moved over the test object and in contact with the test object. Accordingly, the sensor unit is in contact with respective materials of the test object, which may be metallic, non-conductive and/or composite materials. Preferably, an insulating layer, such as e.g. Kapton^{®} tape, separates the sensor unit of the probe from the test object.

The sensor unit may e.g. comprise a capacitance sensor which forms part of the tuning circuit of an oscillator, i.e. of the oscillator circuit of the probe, which is advantageously portable, easy-to-operate and potentially of low cost. The capacitance sensor may include two concentric copper rings insulated from each other, and act as a ground-referenced capacitor so that one 'leg', i.e. one copper ring of the capacitance sensor is connected to ground elsewhere in the oscillator circuit. The two copper rings may be arranged on one side of a printed circuit board, the other side of which may be the base of an enclosure, such as e.g. a brass cylinder which contains respective electronic components of the oscillator, i.e. the oscillator circuit. An amplification circuit may be built into the sensor unit to boost a respective strength of a generated oscillation of the oscillator circuit. Furthermore, a simple frequency counter may be associated with and, e.g. external to, the oscillator circuit and adapted to 'print' out the tuning frequency at 1Hz. This may, then, be sampled by the evaluation unit of the inventive apparatus, which may e.g. comprise a microcontroller controlling a Computer Numerical Control (CNC) framework.

In operation, as the sensor unit is moved over, i.e. scans across the test object, respective electrical properties of the sensor unit are affected by the test object, which in turn affects the tuning frequency of the oscillator circuit. If the test object has no imperfections, the tuning frequency of the oscillator circuit will not change during scanning. However, imperfections will change the tuning frequency of the oscillator circuit. Whether a respective imperfection causes a change in capacitance or inductance or both does not matter; any change in the tuning frequency will be detected. '

By way of example, the sensor unit may output, i.e. operate with a frequency in the region of 1MHz to 2MHz, but there is no limit to the output frequency used. However, small changes e.g. in capacitance, for instance a 1kHz change for an extremely small change in capacitance, result in large changes in the tuning frequency of the oscillator circuit, which are easy to detect.

According to some aspects, the evaluation unit comprises a monitoring unit that is adapted to monitor the associated oscillation frequency of the oscillator circuit during movement of the sensor unit over the test object.

According to some aspects, the monitoring unit is adapted to display a graphic representation of the associated oscillation frequency across the test object, wherein the predetermined oscillation frequency and the other oscillation frequencies are respectively represented in different forms of appearance in the graphic representation.

According to some aspects, the different forms of appearance comprise different colours for the predetermined oscillation frequency and the other oscillation frequencies.

According to some aspects, the probe comprises an electrically insulating layer that is provided on the at least two concentric electrodes to electrically insulate the sensor unit from conductive material in the test object.

According to some aspects, the electrically insulating layer comprises an electrically insulating tape.

According to some aspects, the electrically insulating layer is adapted to be in contact with the test object during movement of the sensor unit over the test object.

According to some aspects, the probe comprises a printed circuit board that is provided with at least two concentric copper rings which form the at least two concentric electrodes, wherein the printed circuit board is mounted to an oscillator housing that accommodates the oscillator circuit.

According to some aspects, the oscillator housing is mounted to a spring-loaded device.

According to some aspects, the spring-loaded device comprises a spring housing that accommodates a piston and a spring, wherein the piston is mounted to the oscillator housing, and wherein the spring biases the piston towards the test object.

According to some aspects, the spring housing forms a machine-holdable or hand-holdable grip.

According to some aspects, the oscillator housing is a brass cylinder.

According to some aspects, the sensor unit forms a capacitance sensor that is adapted to operate at a frequency selected in a range from 1 MHz to 2 MHz.

According to some aspects, the evaluation unit comprises an alarm unit that is adapted to output an alarm if an imperfection is localised in a test object made from metallic, non-conductive, and/or composite materials based on occurrence of the other oscillation frequencies.

The present invention further provides a method for non-intrusively detecting imperfections in a test object made from metallic, non-conductive, and/or composite materials using the inventive apparatus described above. The method comprises moving the sensor unit of the probe over the test object, wherein the oscillator circuit oscillates with an associated oscillation frequency that corresponds to a predetermined oscillation frequency at positions of the test object without imperfections, and that corresponds to other oscillation frequencies at positions with an imperfection in the test object; monitoring the associated oscillation frequency of the oscillator circuit during movement of the sensor unit over the test object by means of the evaluation unit; and identifying localisation of an imperfection in the test object by means of the evaluation unit based on occurrence of the other oscillation frequencies.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a schematic view of an illustrative apparatus with a probe and a test object in accordance with some embodiments,
- Figure 2 shows a schematic view of a sensor unit of the probe of Figure 1 over the test object of Figure 1 in accordance with some embodiments,
- Figure 3 shows a perspective view of the probe of Figure 1 and Figure 2 in accordance with some embodiments,
- Figure 4 shows a sectional view of the probe of Figure 3,
- Figure 5 shows a top view of a first illustrative test object,
- Figure 6 shows a graphic representation of a test result for the first illustrative test object of Figure 5,
- Figure 7 shows an alternative graphic representation of the test result of Figure 6,
- Figure 8 shows a top view of a second illustrative test object,
- Figure 9 shows a graphic representation of a test result for the second illustrative test object of Figure 8,
- Figure 10 shows a top view of a third illustrative test object,
- Figure 11 shows a graphic representation of a test result for the third illustrative test object of Figure 10, and
- Figure 12 shows a flowchart of a method in accordance with some embodiments.

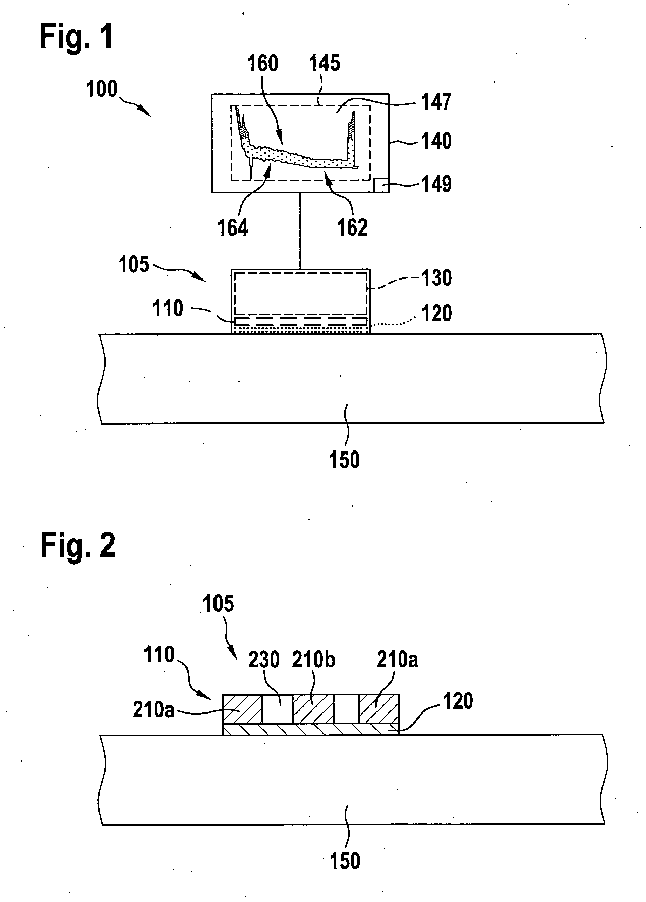

Figure 1 shows an apparatus 100 for non-intrusively detecting imperfections in a test object 150. The test object 150 may be made from metallic, non-conductive, and/or composite materials.

Illustratively, the test object 150 is shown as a planar surface with a uniform thickness. However, the test object 150 may have any form and shape including a curved surface and/or a varying thickness.

The test object 150 may comprise imperfections, which are sometimes also referred to as flaws or defects. For example, the test object 150 may have inclusions of various types (e.g., air, water, metals, non-metals, etc.) and shapes (e.g., bubbles, crystals, etc.), material changes of state (e.g., burn, corrosion, etc.), or any other imperfection, such as e.g. a delamination if the test object 150 is made from composite materials, and so on.

According to one aspect of the present invention, the apparatus 100 comprises a probe 105 that is adapted to be moved over the test object 150 for scanning the test object 150 with respect to imperfections, as well as an evaluation unit 140 that is adapted to localise scanned imperfections in the test object 150 on the basis of output data from the probe 105. Preferably, the output data of the probe 105 represents a tuning frequency of an oscillator, which is monitored and analysed to localise scanned imperfections, if any.

More specifically, the probe 105 preferably comprises at least a sensor unit 110 that is preferentially completely analogue, and an oscillator circuit 130 which forms an oscillator. The probe 105 may optionally further comprise an electrically insulating layer 120 that is provided on the sensor unit 110 to electrically insulate the sensor unit 110 from conductive material in the test object 150. In other words, if the test object 150 is e.g. made from non-conductive material, then the electrically insulating layer 120 may be omitted.

By way of example, the electrically insulating layer 120 may comprise an electrically insulating tape, such as e.g. a Kapton^{®} tape. The electrically insulating layer 120 is preferably adapted to be in contact with the test object 150 during movement of the probe 105, i.e. the sensor unit 110 over the test object 150.

The sensor unit 110 preferably forms a capacitance sensor that is adapted to operate at a frequency selected in a range from 1 MHz to 2 MHz. This capacitance sensor preferentially forms part of the tuning circuit of an oscillator, i.e. the oscillator circuit 130 of the probe 105.

More specifically, the sensor unit 110 is preferably adapted to generate an electrostatic field, and the oscillator circuit 130 is preferably adapted to oscillate with an associated oscillation frequency 160 when the test object 150 is located in the electrostatic field. The associated oscillation frequency 160 is sometimes also referred to as the "tuning frequency" of the oscillator circuit 130.

It should be noted that capacitance sensors and oscillator circuits as such are well-known to the person skilled in the art. Therefore, a more detailed description of these components is omitted, for brevity and conciseness.

According to one aspect, the associated oscillation frequency 160 corresponds to a predetermined oscillation frequency 162 during movement of the probe 105 and, thus, of the sensor unit 110 over the test object 150 at positions without imperfections in the test object 150. However, at positions with imperfections in the test object 150 the associated oscillation frequency 160 preferably changes and, thus, corresponds to other oscillation frequencies 164 than the predetermined oscillation frequency 162. A respective change of the associated oscillation frequency 160 may e.g. result from a change of capacitance, inductance and/or resistance of the oscillator circuit 130.

The associated oscillation frequency 160 is preferably monitored and analysed by the evaluation unit 140 to determine occurrence(s) of the other oscillation frequencies 164. The evaluation unit 140 is preferably adapted to enable localisation of imperfections in the test object 150 based on occurrence(s) of the other oscillation frequencies 164.

For instance, if the associated oscillation frequency 160 changes at a given position of the test object 150 during movement of the probe 105 and, thus, of the' sensor unit 110 over the test object 150 and, therefore, corresponds at the given position to one of the other oscillation frequencies 164, then an imperfection is present at the given position. In a basic implementation of the evaluation unit 140, the latter may comprise an alarm unit 149 that is adapted to output an alarm if an imperfection is localised in the test object 150 based on occurrence of the other oscillation frequencies 164. Alternatively, the alarm unit 149 may be integrated into the probe 105. In the described example, the alarm unit 149 would output an alarm at the given position.

According to one aspect, the evaluation unit 140 comprises a monitoring unit 145 that is adapted to monitor the associated oscillation frequency 160 of the oscillator circuit 130 during movement of the probe 105, i.e. the sensor unit 110 over the test object 150. Illustratively, the monitoring unit 145 is adapted to display a graphic representation 147 of the associated oscillation frequency 160 across the test object 150.

It should be noted that a suitable evaluation unit with an associated monitoring unit as such are readily available to the person skilled in the art. Therefore, a more detailed description of these components is also omitted, for brevity and conciseness.

Preferably, the graphic representation 147 represents for each geometric position of the test object 150 the associated oscillation frequency 160. Accordingly, the geometric positions of the test object 150 where the associated oscillation frequency 160 corresponds to the other oscillation frequencies 164 may be derived from the graphic representation 147.

In the graphic representation 147, the other oscillation frequencies 164 and the predetermined oscillation frequency 162 may be represented in different forms of appearance. For instance, the different forms of appearance may comprise different colours for the predetermined oscillation frequency 162 and the other oscillation frequencies 164. Thus, the other oscillation frequencies 164 may easily and reliably be identified in the graphic representation 147.

Figure 2 shows an embodiment of the probe 105 of the apparatus 100 of Figure 1, which is illustrated above the test object 150. However, for simplicity and clarity of the drawing only the sensor unit 110 and the optional electrically insulating layer 120 of the probe 105 are shown.

According to one aspect of the present invention, the sensor unit 110 comprises at least two concentric electrodes 210a, 210b, and insulation means 230 that insulate the at least two concentric electrodes 210a, 210b from each other. Preferably, but not mandatorily, the sensor unit 110 has a footprint of at most 20mm in diameter, preferentially not more than 10mm in diameter. A reduction in the footprint may advantageously result in an increase of scanning accuracy and a reduction of spatial averaging.

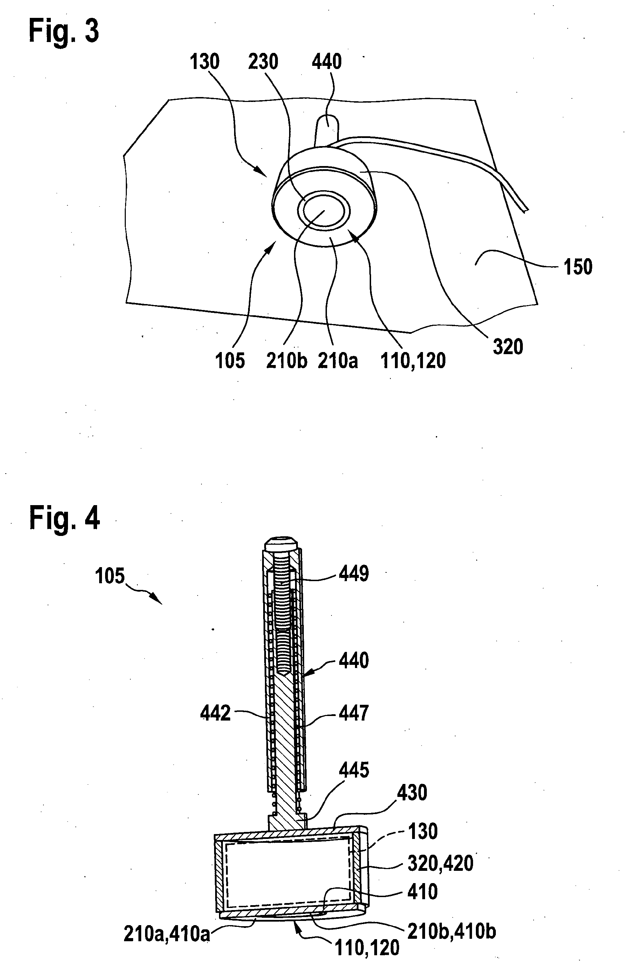

The at least two concentric electrodes 210a, 210b are preferably adapted to generate an electrostatic field. By way of example, the at least two concentric electrodes 210a, 210b may be formed by at least two concentric copper rings (410a, 410b in Figure 4) insulated from each other via the insulation means 230, such that the sensor unit 110 may act as a ground-referenced capacitor with one of the at least two copper rings (410a, 410b in Figure 4) being e.g. connected to ground somewhere in the oscillator circuit 130 of Figure 1. The electrically insulating layer 120 is provided on the at least two concentric electrodes 210a, 210b to electrically insulate the sensor unit 110 from conductive material in the test object 150, if any.

More generally, the sensor unit 110 of probe 105 may take any form that allows generation of an electrostatic field. For example, the sensor unit 110 may be made up of the at least two concentric electrodes 210a, 210b that are separated from each other by the insulation means 230 as described above. In other words, electrode 210b may take the shape of a solid cylinder or a cylinder hull in the centre of the sensor unit 110, while electrode 210a has the shape of a cylinder hull around electrode 210b. As another example, each of electrodes 210a, 210b may take the shape of a solid cylinder, a cylinder hull, a tetraether, or any other shape or combination of shapes that are arranged in parallel to each other.

Furthermore, instead of having e.g. the two concentric electrodes 210a, 210b as shown in Figure 2, the sensor unit 110 may include one electrode 210b and two electrodes 210a. The two electrodes 210a may be connected to each other and arranged in parallel on both sides of electrode 210b. If desired, the sensor unit 110 may include any other number of electrodes. For example, the sensor unit 110 may include one electrode 210a and one electrode 210b, two electrodes 210a and 210b, two electrodes 210a and three electrodes 210b, etc. In other words, the sensor unit 110 may include at least two electrodes 210 (i.e., one electrode 210a and one electrode 210b) or any other number of electrodes 210 greater than two. Preferably, the absolute number of the difference between electrodes 210a and 210b is smaller than or equal to one. Electrodes 210 are preferably arranged alternatingly to avoid the arrangement of two electrodes 210a next to each other or two electrodes 210b next to each other.

Figure 3 shows the probe 105 of the apparatus 100 of Figure 1 with the sensor unit 110 illustrated above the test object 150 of Figure 1 and Figure 2. According to Figure 2, the sensor unit 110 comprises the at least two concentric electrodes 210a, 210b which are insulated from each other via the insulation means 230 and which are covered by the optional electrically insulating layer 120.

By way of example, the probe 105 is embodied in the form of a stamp. More specifically, the sensor unit 110 is illustratively connected to an oscillator housing 320 that preferably accommodates the oscillator circuit 130 of Figure 1 and the oscillator housing 320, in turn, is illustratively mounted to a spring-loaded device 440. The latter illustratively comprises an outer diameter which is significantly smaller than the outer diameter of the oscillator housing 320.

Figure 4 shows the probe 105 of Figure 3 with the sensor unit 110, the optional electrically insulating layer 120, the oscillator housing 320, and the spring-loaded device 440. The sensor unit 110 comprises the at least two concentric electrodes 210a, 210b of Figure 2 and Figure 3.

As described above at Figure 2, the at least two concentric electrodes 210a, 210b may be formed by at least two concentric copper rings 410a, 410b. The at least two concentric copper rings 410a, 410b may be provided on, i.e. mounted to a printed circuit board (PCB) 410 that is mounted to the oscillator housing 320. PCB 410 may further be provided with the oscillator circuit 130 of Figure 1.

The oscillator housing 320 illustratively accommodates the oscillator circuit 130 and may be embodied as a brass cylinder 420. The latter may e.g. have a diameter of at most 3cm.

By way of example, the oscillator housing 320 is sleeve-shaped and closed on its - in Figure 4 - lower side by the PCB 410. On its - in Figure 4 - upper side the oscillator housing 320 is illustratively closed by means of a cover 430. The cover 430 may be embodied as another PCB which may be provided with the oscillator circuit 130 instead of the PCB 410, or which may support only parts of the oscillator circuit 130. Alternatively, the cover 430 may be an integral part of the oscillator housing 320.

Preferably, PCB 410, oscillator housing 320, and cover 430 are intended to enable protection of the oscillator circuit 130 from external parameters, such as temperature and humidity rate. In fact, the oscillator circuit 130 and the sensor unit 110 should preferably be kept as sensible as possible to thickness changes (high output frequency variation for small influences on the sensor unit 110), but not sensible to temperature or humidity.

According to one aspect, the cover 430 is connected to the spring-loaded device 440. The latter preferably comprises a spring housing 442 that accommodates a piston 445 and a spring 447. The piston 445 is preferably mounted, i.e. rigidly attached to the oscillator housing 320 and, more particularly, to the cover 430. The spring 447 is preferably arranged inside the spring housing 442 and, more specifically, between the spring housing 442 and the piston 445. Illustratively, the spring 447 biases the piston 445 away from the spring housing 442 and, thus, toward the test object 150 of Figure 1 to Figure 3, preferably with an at least approximately constant spring force, i.e. consistent pressure. Thus, a profiling or levelling of the test object 150 may advantageously be omitted.

By way of example, the piston 445 is provided with a retaining element 449 that prevents the piston 445 from sliding out of the spring housing 442. The retaining element 449 is illustratively embodied as a screw which is screwed into the piston 445 and which traverses an associated opening in the spring housing 442, against which a respective screw head may be blocked.

The spring housing 442 may form a machine-holdable or hand-holdable grip. Thus, the probe 105 may either be machine-guided or manually guided by an operator.

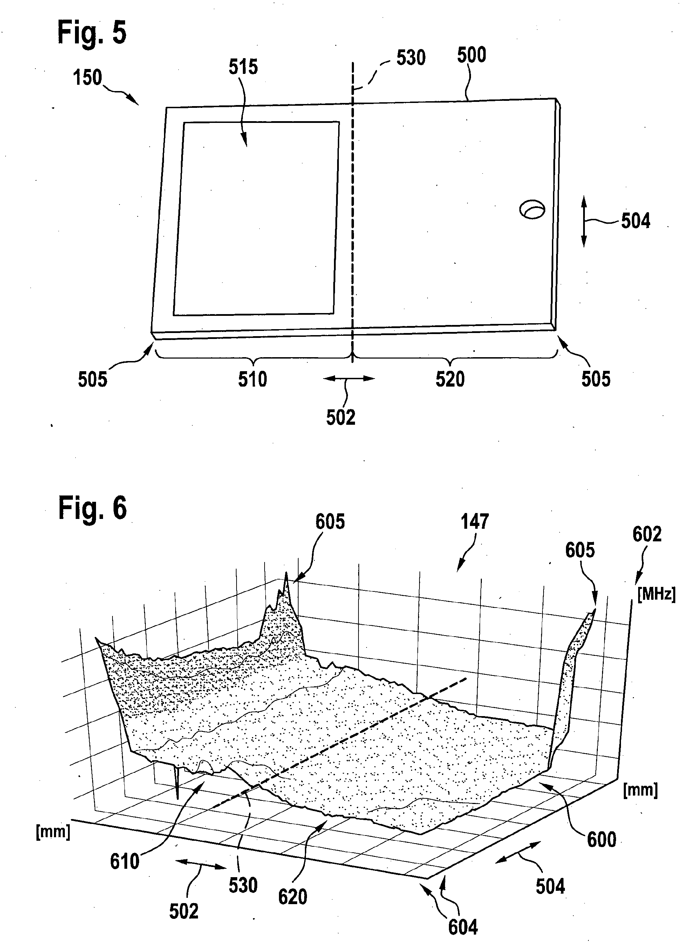

Figure 5 shows the test object 150 of Figure 1 to Figure 3, which is illustratively formed as an aluminium sample 500 with early corrosion imperfection. More specifically, the aluminium sample 500 has a length, i.e. length direction 502, and a width, i.e. width direction 504 with outer edges 505 illustrated in direction of the length direction 502. The aluminium sample 500 is illustratively divided by a virtual separation 530 in the length direction 502 into two areas 510 and 520. By way of example, the area 510 comprises imperfections in the form of early corrosion 515, while the area 520 is free of imperfections.

The early corrosion 515 in the aluminium sample 500 was e.g. obtained by slowly corroding the area 510 using a salty fog oven. As an analogy, the early corrosion 515 in the aluminium sample 500 may be considered as an equivalent to a change in aluminium thickness of 0.1mm or less.

Figure 6 shows the graphic representation 147 of Figure 1, which, by way of example, illustrates an oscillation frequency plot 600 resulting from a scan for imperfections of the aluminium sample 500 of Figure 5 using the apparatus 100 of Figure 1 with the probe 105 according to Figure 1 to Figure 4. In other words, in the illustrated and described example the probe 105 is moved over the aluminium sample 500 such that according to Figure 1, as described above, the oscillator circuit 130 of the probe 105 oscillates with the associated oscillation frequency 160, which is then monitored by the evaluation unit 140, and output in the form of the oscillation frequency plot 600.

More specifically, the oscillation frequency plot 600 is illustratively a three-dimensional graph with an oscillation frequency axis 602 and two geometric positions axes 604. In the illustrated example, the oscillation frequency plot 600 maps respective oscillation frequencies (i.e. the associated oscillation frequencies 160 of Figure 1) by means of the oscillation frequency axis 602 to associated geometric positions on the aluminium sample 500 of Figure 5 by means of the geometric positions axes 604, which represent the length direction 502 and the width direction 504 of Figure 5.

The oscillation frequency plot 600 further shows the virtual separation 530 of Figure 5 that separates the aluminium sample 500 of Figure 5 into the two areas 510 and 520 in Figure 5. This virtual separation line 530 separates the oscillation frequency plot 600 likewise into two different areas, i.e. areas 610 and 620. The area 610 corresponds to the area 510 of Figure 5, which comprises the early corrosion 515 of Figure 5, and the area 620 corresponds to the area 520 of Figure 5, which is free of imperfections.

In other words, the area 610 illustrates the oscillation frequencies which correspond to the other oscillation frequencies 164 of Figure 1 occurring in the area 510 of Figure 5 with early corrosion, i.e. with imperfections. The area 620, in turn, illustrates the oscillation frequencies which correspond to the predetermined oscillation frequency 162 of Figure 1 occurring in the area 520 that is free of imperfections.

To enable an easy and reliable identification of the presence of the imperfection in the area 610, i.e. the area 510 of Figure 5, the oscillation frequencies which are illustrated in the area 610 are represented brighter than the oscillation frequencies which are illustrated in the area 620. Alternatively, or in addition, they may be represented e.g. in another colour, and so on.

It should be noted that the oscillation frequencies which are illustrated on both extremities of the oscillation frequency plot 600 in the length direction 502 are completely different in amplitude and representation than elsewhere. In fact, they represent oscillation frequencies 605 at the outer edges 505 of the aluminium sample 500 of Figure 5, which were fixed by means of an adhesive tape on an associated support and which are, therefore, not considered for analysis purposes.

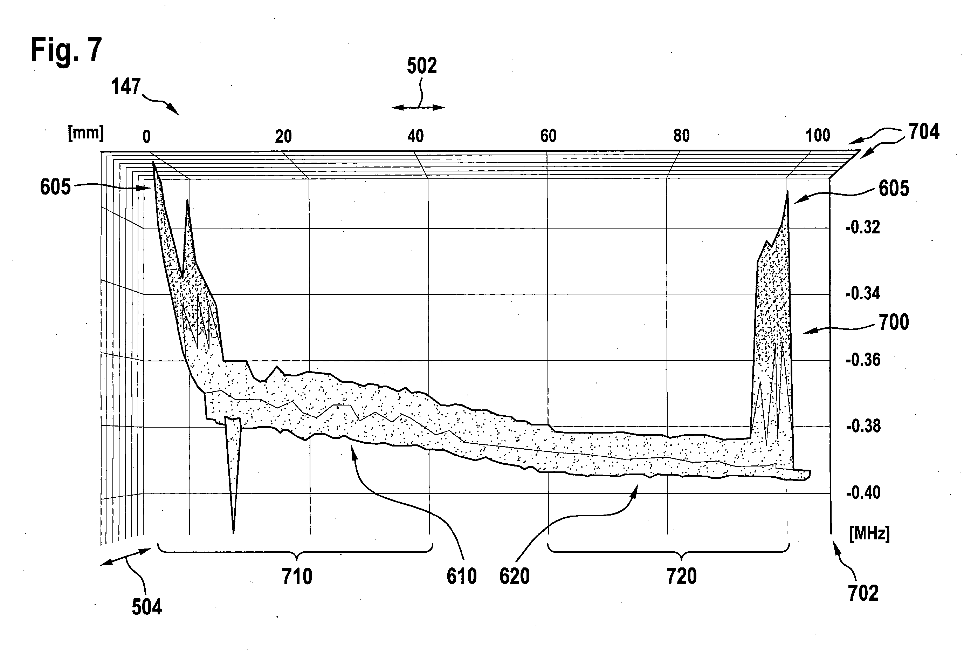

Figure 7 shows the graphic representation 147 of Figure 1, which, by way of example, illustrates an oscillation frequency plot 700 resulting from a scan for imperfections of the aluminium sample 500 of Figure 5 using the apparatus 100 of Figure 1 with the probe 105 according to Figure 1 to Figure 4. In other words, in the illustrated and described example the probe 105 is moved over the aluminium sample 500 such that according to Figure 1, as described above, the oscillator circuit 130 of the probe 105 oscillates with the associated oscillation frequency 160, which is then monitored by the evaluation unit 140, and output in the form of the oscillation frequency plot 700.

More specifically, the oscillation frequency plot 700 is illustratively three-dimensional with an oscillation frequency axis 702 and two geometric positions axes 704. In the illustrated example, the oscillation frequency plot 700 maps respective oscillation frequencies (i.e. the associated oscillation frequencies 160 of Figure 1) by means of the oscillation frequency axis 702 to associated geometric positions on the aluminium sample 500 of Figure 5 by means of the geometric positions axes 704, which represent the length direction 502 and the width direction 504 of Figure 5. The oscillation frequency plot 700 further shows an area 710 that corresponds to the area 510 of Figure 5, which comprises the early corrosion 515 of Figure 5, and an area 720 that corresponds to the area 520 of Figure 5, which is free of imperfections.

At this point, it should be noted that the oscillation frequency plot 700 is derived from the oscillation frequency plot 600 of Figure 6. However, in contrast to the oscillation frequency plot 600 of Figure 6, the respective geometric positions axis 704 in the oscillation frequency plot 700 corresponds to the geometric positions axis 604 that was compressed in the width direction 504 of Figure 6 such that the oscillation frequency plot 700 represents more or less only a two-dimensional graph, wherein the areas 610, 620 of Figure 6 are represented by corresponding areas 710, 720.

As can be derived from the oscillation frequency plot 700, the illustrated oscillation frequencies in the area 710 that extends approximately from 0mm to 40mm in the length direction 502 of the aluminium sample 500 of Figure 5 have an average value of - 0.38MHz, while the illustrated oscillation frequencies in the area 720 that extends approximately from 60mm to 100mm in the length direction 502 of the aluminium sample 500 of Figure 5 have an average value of -0.39MHz. This difference in the average value of the area 710 from the average value of the area 720 indicates presence of the imperfection, i.e. the early corrosion 515 of Figure 5, in the area 710, i.e. the area 510 of Figure 5.

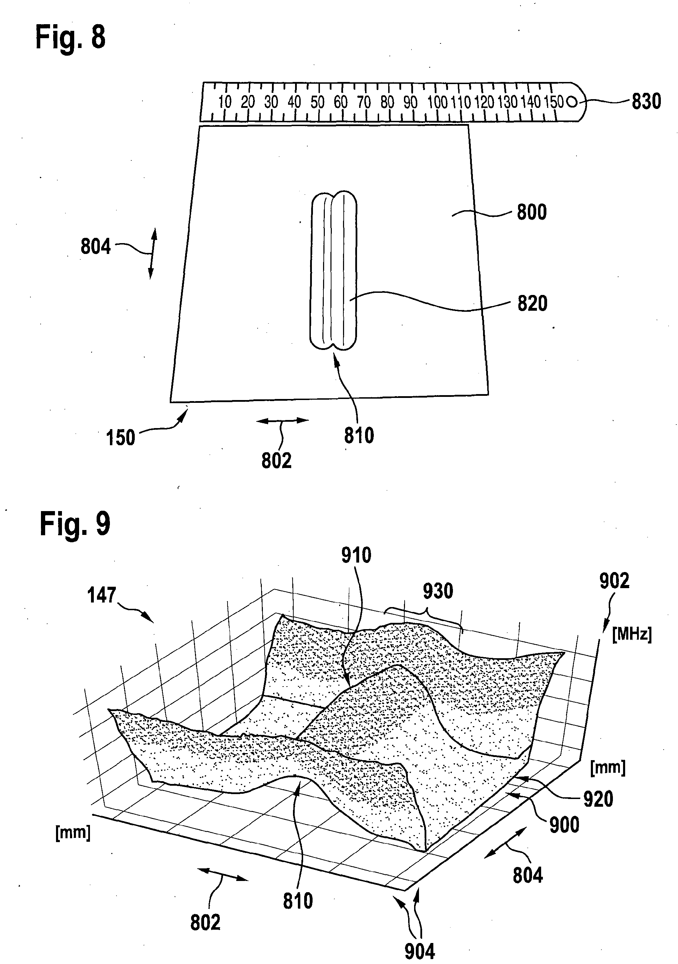

Figure 8 shows the test object 150 of Figure 1 to Figure 3, which is illustratively formed as an aluminium sample 800 with a groove-shaped imperfection. More specifically, the aluminium sample 800 e.g. has a thickness of 1.5mm, and a length, i.e. length direction 802, and a width, i.e. width direction 804. In an approximately central position of the aluminium sample 800, an area 810 with a groove 820 that represents the groove-shaped imperfection is formed. The groove 820 varies e.g. in depth from 0.1 mm to 0mm. By way of example, a measuring tape 830 is positioned on top of the aluminium sample 800 to enable determination of a geometric position of the groove 820 in the length direction 802 of the aluminium sample 800.

Figure 9 shows the graphic representation 147 of Figure 1, which, by way of example, illustrates an oscillation frequency plot 900 resulting from a scan for imperfections of the aluminium sample 800 of Figure 8 using the apparatus 100 of Figure 1 with the probe 105 according to Figure 1 to Figure 4. The scan is performed from a surface of the aluminium sample 800 that is opposed to the surface that exhibits the groove 820 of Figure 8. More specifically, in the described example the probe 105 is moved over the aluminium sample 800 such that according to Figure 1, as described above, the oscillator circuit 130 of the probe 105 oscillates with the associated oscillation frequency 160, which is then monitored by the evaluation unit 140, and output in the form of the oscillation frequency plot 900.

More specifically, the oscillation frequency plot 900 is illustratively a three-dimensional graph with an oscillation frequency axis 902 and two geometric positions axes 904. In the illustrated example, the oscillation frequency plot 900 maps respective oscillation frequencies (i.e. the associated oscillation frequencies 160 of Figure 1) by means of the oscillation frequency axis 902 to associated geometric positions on the aluminium sample 800 of Figure 8 by means of the geometric positions axes 904, which represent the length direction 802 and the width direction 804 of Figure 8.

As a result, the oscillation frequency plot 900 allows to identify an area 930 that comprises an imperfection and that corresponds to the area 810 with the groove 820 of Figure 8. The area 930 may easily and reliably be identified by respectively illustrated oscillation frequencies 910 in the area 930, which are clearly distinguishable from oscillation frequencies 920 which are illustrated in a different manner for all areas which are free of imperfections, i.e. all areas of the aluminium sample 800 of Figure 8 which do not correspond to the area 810.

It should be noted that the oscillation frequencies which are illustrated on both extremities of the oscillation frequency plot 800 in the width direction 804 are completely different in amplitude and representation than elsewhere, but similar to the oscillation frequencies 910. In fact, they represent oscillation frequencies at outer edges of the aluminium sample 800 of Figure 8, which emanate from an adhesive tape that was used to fix the aluminium sample 800 on an associated support and which are, therefore, not considered for analysis purposes.

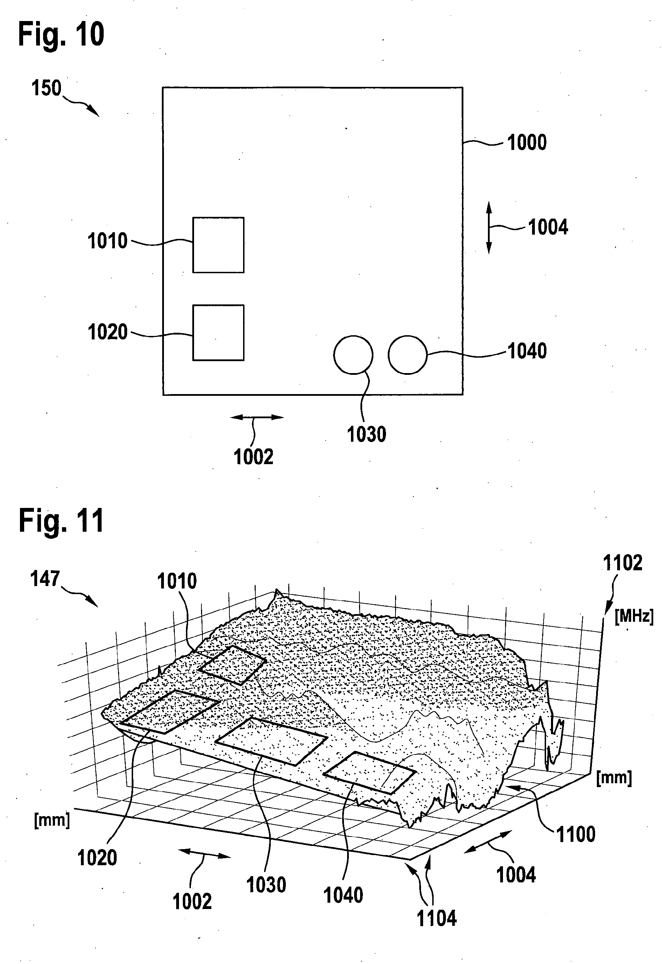

Figure 10 shows the test object 150 of Figure 1 to Figure 3, which is illustratively formed as carbon fibre sample 1000 with four different illustrative imperfections. More specifically, the carbon fibre sample 1000 has a length, i.e. length direction 1002, and a width, i.e. width direction 1004. In the width direction 1004 of the carbon fibre sample 1000, an area 1010 with an aluminium imperfection, and an area 1020 with a wooden imperfection are formed. In the length direction 1002 of the carbon fibre sample 1000, adjacent to the area 1020, an area 1030 with an enclosed air imperfection, and an area 1040 with an enclosed water imperfection are formed.

Figure 11 shows the graphic representation 147 of Figure 1, which, by way of example, illustrates an oscillation frequency plot 1100 resulting from a scan for imperfections of the carbon fibre sample 1000 of Figure 10 using the apparatus 100 of Figure 1 with the probe 105 according to Figure 1 to Figure 4. In other words, in the described example the probe 105 is moved over the carbon fibre sample 1000 such that according to Figure 1, as described above, the oscillator circuit 130 of the probe 105 oscillates with the associated oscillation frequency 160, which is then monitored by the evaluation unit 140, and output in the form of the oscillation frequency plot 1100.

More specifically, the oscillation frequency plot 1100 is illustratively a three-dimensional graph with an oscillation frequency axis 1102 and two geometric positions axes 1104. In the illustrated example, the oscillation frequency plot 1100 maps respective oscillation frequencies (i.e. the associated oscillation frequencies 160 of Figure 1) by means of the oscillation frequency axis 1102 to associated geometric positions on the carbon fibre sample 1000 of Figure 10 by means of the geometric positions axes 1104, which represent the length direction 1002 and the width direction 1004 of Figure 10. As a result, the oscillation frequency plot 1100 allows to identify the areas 1010, 1020, 1030, and 1040 of Figure 10.

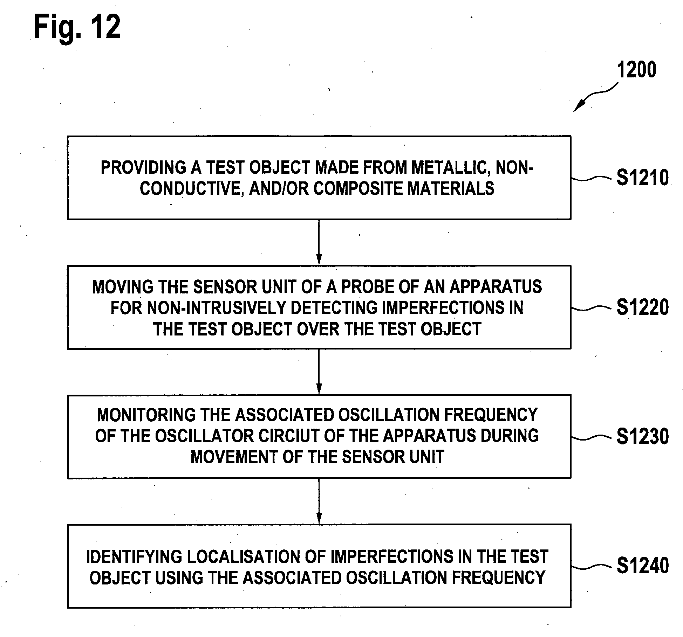

Figure 12 shows an illustrative method 1200 for non-intrusively detecting imperfections in a test object made from metallic, non-conductive, and/or composite materials. The method 1200 is preferably performed using the apparatus 100 of Figure 1 with the probe 105 according to Figure 1 to Figure 4.

The method 1200 starts at step S1210 with providing a test object made from metallic, non-conductive, and/or composite materials. For instance, the test object 150 of Figure 1 to Figure 3 is provided.

At step S1220, the sensor unit 110 of the probe 105 according to Figure 1 to Figure 4 is moved over the test object, wherein the oscillator circuit 130 of the probe 105 according to Figure 1 to Figure 4 oscillates with an associated oscillation frequency, e.g. oscillation frequency 160 of Figure 1. The associated oscillation frequency corresponds to a predetermined oscillation frequency, e.g. predetermined oscillation frequency 162 of Figure 1, at locations of the test object without imperfections, and it corresponds to other oscillation frequencies, e.g. the other oscillation frequencies 164 of Figure 1, at locations with an imperfection in the test object.

At step S1230, the associated oscillation frequency of the oscillator circuit is monitored during movement of the sensor unit over the test object by means of the evaluation unit 140 of the apparatus 100 of Figure 1. Monitoring of the associated oscillation frequency preferably comprises generating and displaying a graphic representation, e.g. the graphic representation 147 of Figure 1, on the monitoring unit 145 of the apparatus 100 of Figure 1.

At step S1240, localisation of an imperfection in the test object is performed by means of the evaluation unit based on occurrence of the other oscillation frequencies. Identification of the localisation may be performed by an operator who visualizes the graphic representation. Alternatively, the identification may be performed by suitable computing means implemented by means of the evaluation unit. In the latter case, an alarm may be generated and output via the alarm unit 149 of the evaluation unit 140 of the apparatus 100 of Figure 1 upon identification of an imperfection.

### Reference List

- 100: apparatus
- 105: probe
- 110: sensor unit
- 120: insulating layer
- 130: oscillator circuit
- 140: evaluation unit
- 145: monitoring unit
- 147: graphic representation
- 149: alarm unit
- 150: test object
- 160: oscillation frequency
- 162: predetermined oscillation frequency
- 164: other oscillation frequency
- 210a, 210b: electrodes
- 230: insulation means
- 320: oscillator housing
- 410: printed circuit board
- 410a, 410b: copper rings
- 420: brass cylinder
- 430: cover
- 440: spring-loaded device
- 442: spring housing
- 445: piston
- 447: spring
- 449: retaining element
- 500: aluminium sample with early corrosion imperfection
- 502: length
- 504: width
- 505: outer edges
- 510: area with early corrosion
- 515: early corrosion
- 520: area without early corrosion
- 530: virtual area separation
- 600: oscillation frequency plot
- 602: oscillation frequency axis
- 604: geometric positions axes
- 605: oscillation frequencies at outer edges of sample
- 610: oscillation frequencies in area with early corrosion
- 620: oscillation frequencies in area without early corrosion
- 700: oscillation frequency plot
- 702: oscillation frequency axis
- 704: geometric positions axes
- 710: detected area with early corrosion
- 720: detected area without early corrosion
- 800: aluminium sample with groove-shaped imperfection
- 802: length
- 804: width
- 810: area with groove
- 820: groove
- 830: measuring tape
- 900: oscillation frequency plot
- 902: oscillation frequency axis
- 904: geometric positions axes
- 910: oscillation frequencies in area with groove
- 920: oscillation frequencies in area without groove
- 930: identified area with groove
- 1000: carbon fibre sample with various imperfections
- 1002: length
- 1004: width
- 1010: area with aluminium imperfection
- 1020: area with wooden imperfection
- 1030: area with enclosed air imperfection
- 1040: area with enclosed water imperfection
- 1100: oscillation frequency plot
- 1102: oscillation frequency axis
- 1104: geometric positions axes
- 1200: flowchart
- S1210, S1220, S1230, S1240: method steps

## Claims

1. An apparatus (100) for non-intrusively detecting imperfections in a test object (150) made from metallic, non-conductive, and/or composite materials, comprising:
a probe (105) that is adapted to be moved over a test object (150) made from metallic, non-conductive, and/or composite materials, comprising:
a sensor unit (110) with at least two concentric electrodes (210a, 210b), and insulation means (230) that insulate the at least two concentric electrodes (210a, 210b) from each other, wherein the at least two concentric electrodes (210a, 210b) are adapted to generate an electrostatic field; and
an oscillator circuit (130) that is adapted to oscillate with an associated oscillation frequency (160) in response to a test object (150) being located in the electrostatic field,
wherein the associated oscillation frequency (160) corresponds to a predetermined oscillation frequency (162) during movement of the sensor unit (110) over the test object (150) at positions without imperfections in the test object (150), and wherein the associated oscillation frequency (160) corresponds to other oscillation frequencies (164) at positions with imperfections in the test object (150); and
an evaluation unit (140) that is adapted to enable localisation of an imperfection in a test object (150) made from metallic, non-conductive, and/or composite materials based on occurrence of the other oscillation frequencies (164).

2. The apparatus (100) of claim 1, wherein the evaluation unit (140) comprises a monitoring unit (145) that is adapted to monitor the associated oscillation frequency (160) of the oscillator circuit (130) during movement of the sensor unit (110) over the test object (150).

3. The apparatus (100) of claim 2, wherein the monitoring unit (145) is adapted to display a graphic representation (147) of the associated oscillation frequency (160) across the test object (150), and wherein the predetermined oscillation frequency (162) and the other oscillation frequencies (164) are respectively represented in different forms of appearance in the graphic representation (147).

4. The apparatus (100) of claim 3, wherein the different forms of appearance comprise different colours for the predetermined oscillation frequency (162) and the other oscillation frequencies (164).

5. The apparatus (100) of any one of the preceding claims, wherein the probe (105) comprises an electrically insulating layer (120) that is provided on the at least two concentric electrodes (210a, 210b) to electrically insulate the sensor unit (110) from conductive material in the test object (150).

6. The apparatus (100) of claim 5,wherein the electrically insulating layer (120) comprises an electrically insulating tape.

7. The apparatus (100) of claim 5 or 6, wherein the electrically insulating layer (120) is adapted to be in contact with the test object (150) during movement of the sensor unit (110) over the test object (150).

8. The apparatus (100) of any one of the preceding claims, wherein the probe (105) comprises a printed circuit board (410) that is provided with at least two concentric copper rings (410a, 410b) which form the at least two concentric electrodes (210a, 210b), wherein the printed circuit board (410) is mounted to an oscillator housing (320) that accommodates the oscillator circuit (130).

9. The apparatus (100) of claim 8, wherein the oscillator housing (420) is mounted to a spring-loaded device (440).

10. The apparatus (100) of claim 9, wherein the spring-loaded device (440) comprises a spring housing (442) that accommodates a piston (445) and a spring (447), wherein the piston (445) is mounted to the oscillator housing (320), and wherein the spring (447) biases the piston (445) towards the test object (150).

11. The apparatus (100) of claim 9 or 10, wherein the spring housing (442) forms a machine-holdable or hand-holdable grip.

12. The apparatus (100) of any one of claims 7 to 11, wherein the oscillator housing (320) is a brass cylinder (420).

13. The apparatus (100) of any one of the preceding claims, wherein the sensor unit (110) forms a capacitance sensor that is adapted to operate at a frequency selected in a range from 1 MHz to 2 MHz.

14. The apparatus (100) of any one of the preceding claims, wherein the evaluation unit (140) comprises an alarm unit (149) that is adapted to output an alarm if an imperfection is localised in a test object (150) made from metallic, non-conductive, and/or composite materials based on occurrence of the other oscillation frequencies (164).

15. A method (1200) for non-intrusively detecting imperfections in a test object made from metallic, non-conductive, and/or composite materials using the apparatus according to any one of the preceding claims, comprising:
moving (S1220) the sensor unit of the probe over the test object, wherein the oscillator circuit oscillates with an associated oscillation frequency that corresponds to a predetermined oscillation frequency at positions of the test object without imperfections, and that corresponds to other oscillation frequencies at positions with an imperfection in the test object;
monitoring (S1230) the associated oscillation frequency of the oscillator circuit during movement of the sensor unit over the test object by means of the evaluation unit; and
identifying (S1240) localisation of an imperfection in the test object by means of the evaluation unit based on occurrence of the other oscillation frequencies.
